# EUROPÄISCHE PATENTSCHRIFT

(11) **EP 0 819 295 B1**
(45) Veröffentlichungstag und Bekanntmachung des Hinweises auf die Patenterteilung: **12.05.1999**
(21) Anmeldenummer: 96906693.5
(22) Anmeldetag: 12.03.1996
(51) Int. Cl.: G08G 1/0968

(54) **VERFAHREN FÜR EIN FAHRZEUGLEIT- UND INFORMATIONSSYSTEM**
PROCESS FOR A VEHICLE CONTROL AND INFORMATION SYSTEM
PROCEDE POUR SYSTEME DE GUIDAGE ET D'INFORMATION DE VEHICULE

(30) Priorität: 06.04.1995 DE 19512528; 21.12.1995 DE 19547574
(43) Veröffentlichungstag der Anmeldung: 21.01.1998
(73) Patentinhaber: DeTeMobil Deutsche Telekom MobilNet GmbH, 53227 Bonn (DE)
(72) Erfinder: BEYER, Rolf, D-53604 Bad Honnef (DE); FLECK, Gerhard, D-53340 Meckenheim (DE); GÜNTHER, Bernd, D-53859 Niederkassel (DE)
(74) Vertreter: Riebling, Peter, Dr.-Ing.
(86) Internationale Anmeldenummer: DE9600438
(87) Internationale Veröffentlichungsnummer: WO9631858

(56) Entgegenhaltungen:
- WO-A-92/10808
- WO-A-92/14215
- DE-A- 2 846 197
- FR-A- 2 700 047

## Beschreibung

Die Erfindung betriffl ein Verfahren für ein Fahrzeugleit- und informationssystem, bei dem mit Hilfe mindestens eines Funkübertragungssystems Daten sowie verkehrsrelevante Informationen zwischen einem Fahrzeug und einer Zentraleinheit übermittelt werden.

Es sind bereits verschiedene Verfahren und Anordnungen für Fahrzeugleit- und Informationssysteme bekannt geworden. Dabei lassen sich vor allem zwei prinzipielle Systeme unterscheiden.
Zum einen handelt es sich um autarke Navigationssysteme, bei denen eine Zielführung des Fahrzeugs allein in diesem selbst abläuft. Hierfür ist jedoch die Mitführung einer erheblichen Menge gespeicherter Streckendaten auf geeigneten Datenträgern von Nöten. Weiter ist der Zugang zu aktuellen Verkehrsdaten bei solchen Systemen oft nicht möglich.

Ein autarkes Karteninformationssystem mit Navigations- und
Routenplanungsmöglichkeiten ist von der Firma CARDY Karten Informations Systeme GmbH, Mönchengladbach bekannt und wurde in einem Prospekt im Oktober 1993 vorgestellt.
Bei CARDY handelt es sich um ein Karteninformationssystem mit Zielführungsprogramm, basierend auf einer auf einem Datenträger im Fahrzeug verfügbaren elektronischen Kartendatenbank. Mit Hilfe eines GPS-Ortungssystems kann ein sogenanntes "MAP-Matching", d.h. eine Anpassung des Kartenausschnittes an die ermittelte Fahrzeugposition durchgeführt werden, so daß der aktuelle Standort des Fahrzeuges auf dem entsprechenden Kartenausschnitt permanent angezeigt werden kann. Die vom GPS ermittelte Fahrzeugposition kann auch über Funk an eine Zentrale übertragen werden, um dort z.B. ein Flottenmanagement zu realisieren. Es ist weiterhin eine Routenplanung anhand der im Fahrzeug vorhandenen elektronisch gespeicherten Karten möglich, wobei die Zielführung des Fahrzeuges anhand der geplanten Route und den vom GPS-System ermittelten Standortpositionen erfolgt.

Über das Verfahren des Traffic Message Channel (TMC) im Rahmen des Radio Data Systems (RDS) werden codierte Verkehrsinformationen neben dem aktuellen Radioprogramm ausgesandt. Im Fahrzeug können aus den angebotenen Informationen diejenigen selektiert werden, die für die momentane Region und Fahrtrichtung interessant sind. Neben der weiterhin bestehenden Notwendigkeit der Datenaufarbeitung im Fahrzeug ist bei solchen Systemen noch keine gezielte, individuell abgestimmte Informationsvergabe möglich.

Dies kann erreicht werden, indem über bidirektionale Datenübertragungssysteme wie Funkübertragung eine Verbindung zwischen dem Fahrzeug und einer oder mehreren Informationszentralen aufgebaut wird.
Dies kann zum einen über ein fest installiertes Bakensystem erreicht werden, wobei ein entsprechendes Fahrzeuggerät beim Passieren einer Bake mit dieser jeweils in Kontakt tritt. Zur lückenlosen Bereitstellung von Informationen erfordert dies jedoch ein flächendeckendes Netz von Baken, was sich im allgemeinen nicht verwirklichen läßt. Der mit Informationen versorgte Raum beschränkt sich daher meist vor allem auf Ballungsräume.

Zum anderen kann durch die Ausnutzung eines Funkübertragungssystems wie eines digitalen GSM-Netzes ein bidirektionaler Informationsaustausch erreicht werden, der sich bei der flächendeckenden Versorgung durch Mobilfunknetze kontinuierlich aufrechterhalten läßt.
Nun ist es zumeist wünschenswert, dem Fahrer nur speziell mit denjenigen Informationen zu versorgen, die seinen momentanen Aufenthaltsort auf einem gewissen Streckenabschnitt sowie seine Fahrtrichtung betreffen. Hierzu ist das System Of Cellular RAdio for Traffic Efficiency and Safety (SOCRATES) bekannt, das aufgrund von im KFZ vorhandenen Positionsdaten und Routeninformationen regional über GSM ausgesendete Verkehrsinformationen filtert und dem Fahrer anzeigt. Dabei ergibt sich jedoch automatisch die Notwendigkeit von Ortungseinrichtungen zur ständigen Positionsbestimmung des Fahrzeugs, womit ein entsprechender Aufwand an Technik und Kosten einhergeht.

Aufgabe der vorliegenden Erfindung ist es, einen bidirektionalen Informationsfluß zwischen dem Fahrzeug und einer Leit- und Informationszentrale zu garantieren, sowie die ständige Bereitstellung von aktuellen Informationen für den Fahrer - in einem auf den Aufenthaltsbereich des Fahrzeugs abgestimmten Rahmen -, wobei dieser Rahmen bevorzugt vom Fahrer festlegbar und beeinflußbar ist. Dabei wird vor allem von Seiten des Fahrzeugs ein möglichst geringer technischer Aufwand und eine damit verbundene kostengünstige Nutzung des Systems durch den Fahrer angestrebt.

Die Aufgabe wird erfindungsgemäß durch die Merkmale des Hauptanspruches gelöst. Es werden dem Fahrer Positionsdaten sowie zusätzliche verkehrsrelevante Informationen angezeigt, insbesondere Leithinweise wie aktuelle Abbiegeempfehlungen aus der berechneten Route. Die Berechnung der mindestens einen Fahrtroute, die in der Datenverarbeitungseinheit der Zentrale und/oder derjenigen des Fahrzeugs erfolgt, wird mit einem Algorithmus, der auf bekannten durchschnittlichen Reisezeiten (Streckenwiderständen) basiert, durchgeführt. Der Routenberechnung lassen sich insbesondere Vorgaben zugrundelegen, die vom Fahrer selbst über ein Dateneingabegerät eingegeben und an die Datenverarbeitungseinheiten übermittelt werden.

Es folgt eine Übermittlung der Routendaten über das Funkübertragungssystem, so daß in beiden Datenverarbeitungseinheiten dieselben Routen vorliegen. Auf dieser Grundlage erfolgt eine Echtzeitsimulation der Fahrt des Fahrzeugs, die idealerweise sowohl in der Datenverarbeitungseinheit des Zentrale als auch in der Datenverarbeitungseinheit des Fahrzeugs abläuft.
Es kann jedoch auch eine Echtzeitsimulation nur in der Datenverarbeitungseinheit der Zentrale oder nur in der Datenverarbeitungseinheit des Fahrzeug erfolgen, was einen reduzierten Aufwand in der jeweils anderen Datenverarbeitungseinheit und somit eine entsprechende Kostenersparnis zur Folge hat. In diesem Falle ist lediglich eine Übertragung der Fahrzeugposition, die sich aus der Echtzeitsimulation ergibt, zumindest in regelmäßigen Abständen an die jeweils andere Datenverarbeitungseinheit nötig.
Jede Echtzeitsimulation kann komplett eigenständig in einer Datenverarbeitungseinheit ablaufen, ohne daß ein Zugriff auf Betriebs- oder Standortparameter des Fahrzeugs nötig wäre. Die Datenverarbeitungseinheit stellt somit in Bezug auf die Echtzeitsimulation ein abgeschlossenes System dar, das als Eingangsdaten lediglich die mindestens eine berechnete Fahrtrote benötigt und in dem die Echtzeitsimulation durch ein Startsignal in Gang gesetzt wird. Somit durchläuft ein virtuelles Fahrzeug eine virtuelle Fahrt in der entsprechenden Datenverarbeitungseinheit, die der tatsächlichen Fahrt des realen Fahrzeugs auf der realen Fahrtroute entspricht. Idealerweise sind die virtuellen Fahrtverläufe und der reale Fahrtverlauf vollkommen identisch. Abweichungen zwischen den Fahrtverläufen werden durch Synchronisation bzw. Plausibilitätsprüfungen abgefangen.

Für den Fall einer Echtzeitsimulation sowohl in der Datenverarbeitungseinheit des Fahrzeugs als auch in der Datenverarbeitungseinheit der Zentrale erfolgt eine Synchronisation der Echtzeitsimulationen über das Funkübertragungssystem, die je nach Anspruch an die Genauigkeit des Systems und die Minimierung des Signalisierungsaufwandes z.B. nur zum Start der Simulationen oder in regelmäßigen Abständen erfolgt, zumindest jedoch bei Korrekturen der Simulation von Seiten des Fahrers z.B. über ein fahrzeugseitiges Dateneingabegerät. Bei dieser Ausführungsform der Erfindung wird erreicht, daß in beiden Systemen zu beliebiger Zeit Positionsinformationen des Fahrzeugs abgefragt werden können, deren Abgleich über das Funkübertragungssystem jedoch nur von Zeit zu Zeit erfolgen muß. Zusätzlich zu einem drastisch reduzierten Signalisierungsaufwand über das Funkübertragungssystem ist auf diese Weise auch bei zeitweiser Unterbrechung Funkversorgung noch die Bereitstellung von routenbezogenen Verkehrsinformationen, speziell der Fahrzeugposition sowie von Zielführungshinweisen, an den Fahrer gewährleistet werden. Weiter erlaubt dieses auf individuellen Fahrtverläufen basierende Verfahren die gezielte Vergabe von Informationen über ein bidirektionales Funkübertragungssystem an die jeweiligen Fahrzeuge, insbesondere von aktuellen Informationen, die den Aufenthaltsbereich des Fahrzeugs betreffen. Die zur Zuordnung nötigen Positionsdaten des Fahrzeugs können leicht aus der Echtzeitsimulation gewonnen werden. Eine direkte Bestimmung der tatsächlichen aktuellen Fahrzeugposition über zusätzlichen Aufwand an Ortungssystemen erübrigt sich. Eine Plausibilitäfsprüfung und eventuell notwendige Korrektur der Fahrzeugposition in der Simulation kann vom Fahrer selbst durch direkte fahrzeugseitige Eingabe erfolgen.

Anwendungsgebiet der Erfindung sind insbesondere Weiterbildungen unter Einbeziehung eines digitalen Mobilfunknetzes nach dem GSM-Standard. GSM-Netze stellen eine bereits weitgehend flächendeckende Funkversorgung zur Verfügung, so daß die kontinuierliche Versorgung der Fahrzeuge mit Informationen als weiterer Vorteil zum tragen kommt.

Eine Ausbildung des erfindungsgemäßen Gegenstandes sieht vor, daß der Fahrer selbst fahrzeugseitig über ein Dateneingabegerät Vorgaben zur Fahrt eingeben kann, die der Festlegung des virtuellen Fahrtverlaufes zugrundegelegt werden. Dies betrifft vor allem die Start- und Zielorte der Fahrtroute, bevorzugte Streckenabschnitte der Route und eventuelle Angaben zu Ausweichstrecken. Der Fahrtverlauf wird dann auf optischem und/oder akustischem Wege im Fahrzeug angezeigt und dem Fahrer wird die Möglichkeit gegeben, über ein Dateneingabegerät Korrekturen zur Fahrtroute, insbesondere zur momentanen Fahrzeugposition, vorzunehmen.
Dem Fahrer bietet das Fahrzeugleitsystem somit neben fortlaufender Informationsbereitstellung die Möglichkeit, zu jedem Zeitpunkt den Ablauf seinen individuellen Wünschen anzupassen sowie kontrollierend in das System einzugreifen.

Hierzu bietet es sich an, eine Synchronisation des virtuellen Fahrtverlaufes in der Datenverarbeitungseinheit der Zentraleinheit mit dem virtuellen Fahrtverlauf in der Datenverarbeitungseinheit des Fahrzeugs zumindest dann vorzunehmen, wenn eine Eingabe von Daten über das fahrzeugseitige Dateneingabegerät erfolgt. Der Signalisierungsaufwand über das Funkübertragungssystem ist weiterhin auf ein Minimum reduzierbar und erfolgt nur bei tatsächlicher Notwendigkeit eines Abgleichs.

Vorzugsweise wird das Fahrzeugleitsystem durch zusätzliche aktuelle verkehrsrelevante Informationen ergänzt. Anhand des Aufenthaltsbereichs des Fahrzeugs, der aus dem virtuellen Fahrtverlauf gewonnen wird, wählt die Zentraleinheit gezielt aktuelle Informationen aus wie Streckenzustand, Baustellen, Verkehrsdichte u.ä., die die vom Fahrzeug befahrene Fahrtroute und/oder eine oder mehrere Alternativrouten betreffen, und übermittelt diese an das Fahrzeug.
Man erreicht somit den Vorteil einer dynamischen, die momentanen Gegebenheiten berücksichtigenden Verkehrsführung. Dabei werden dem Fahrer bereits derart individuell ausgewählte Informationen zur Verfügung gestellt, die nur den für ihn interessierenden Teil des Straßennetzes betreffen. Die gezielte Auswahl der Informationen entsprechend des Aufenthaltsbereichs des Fahrzeuges wird dadurch vereinfacht, daß die Kenntnis über den Aufenthaltsbereich des Fahrzeugs aus dem virtuellen Fahrtverlauf bereits ständig vorliegt.
Eine weitere Ausgestaltung sieht vor, daß das Verkehrsleitsystem dem Fahrer zusätzliche Informations- und Auftragsdienste zur Verfügung stellt. Neben der Bereitstellung beliebiger Verkehrs- und Streckeninformationen können hierbei auch weitere Dienste wie Hotelreservierungen, Buchung von Flügen u.ä. vorgesehen werden.

Die Erfindung kann zur Verifikation der Positionsdaten mit einem Ortungssystem vorteilhaft kombiniert werden. Hierzu bieten sich Funkortungssysteme wie das Global Positioning System (GPS) an. Nach Übermittlung der Positionsdaten an die fahrzeugseitige Datenverarbeitungseinheit erfolgt ein Vergleich der Positionsdaten mit der Fahrzeugposition der virtuellen Fahrt. Treten Abweichungen oberhalb eines Toleranzrahmens auf, erfolgt eine Korrektur der Fahrzeugposition auf der virtuellen Route der Echtzeitsimulation.
Auch für diese Weiterbildung ist es vorteilhaft, eine Synchronisation der virtuellen Fahrtverläufe in den Datenverarbeitungseinheiten der Zentraleinheit und des Fahrzeugs zumindest nach erfolgten Korrekturen der Fahrzeugposition der virtuellen Fahrt vorzunehmen.

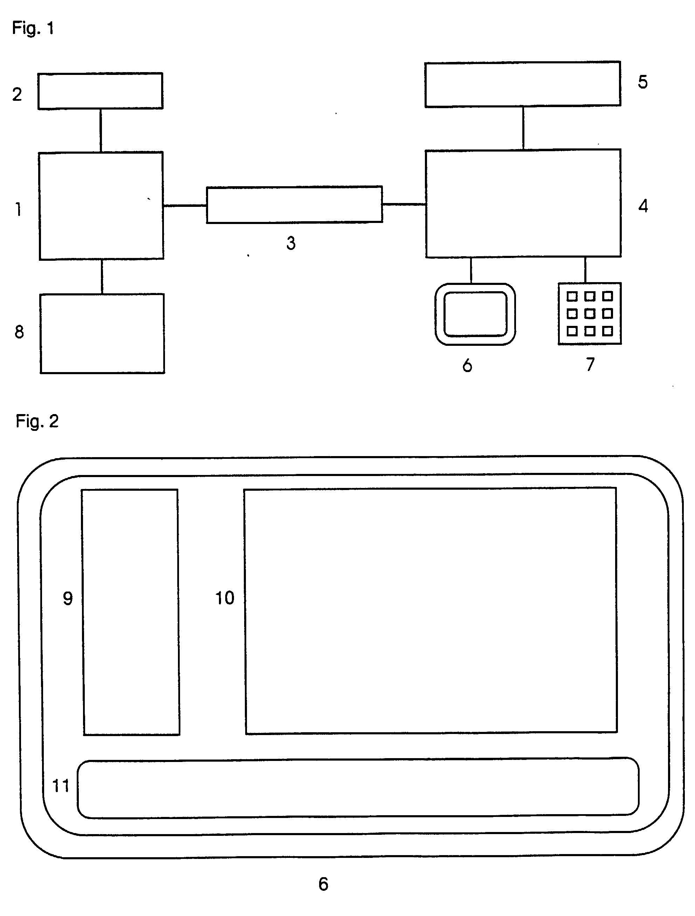

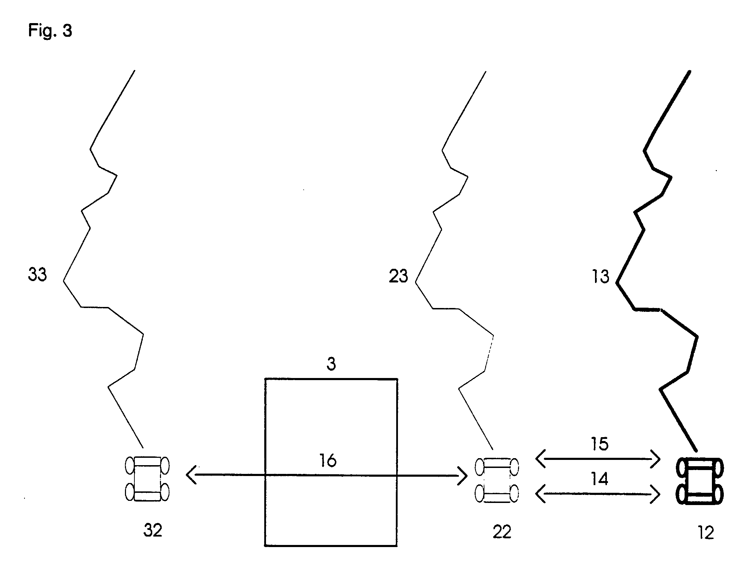

Im folgenden wird ein spezielles Ausführungsbeispiel der Erfindung anhand der Figuren 1 bis 3 näher erläutert.

Fig. 1 zeigt eine schematische Darstellung der Zentraleinheit sowie der fahrzeugseitigen Komponenten, die über ein Mobilfunknetz miteinander verbundenen sind.

Fig. 2 zeigt ein Fahrer-Display als optisches Anzeigegerät für Informationen im Fahrzeug.

Fig. 3 verdeutlicht den Abgleich der Fahrtverläufe

Das fahrzeugseitige Endgerät 4 im Fahrzeug 12 ist verbunden mit einem Tastenfeld 7 als Dateneingabegerät, über das der Fahrer gibt zu Beginn seiner Fahrt im Fahrzeug Daten wie Ausgangsort, Zielort und ggf. bevorzugte Strecken (z.B. "über Hannover") eingibt.

Zur Berechnung der günstigsten Standardroute gibt es zwei Möglichkeiten:

### 1. Berechnung der Route im Endgerät 4 des Fahrzeugs:

Das fahrzeugseitige System übermittelt die Daten der berechneten Route über das Mobilfunknetz 3 an die Zentraleinheit 1 **(ZE)**.

### 2. Berechnung der Route in der Zentraleinheit 1:

Das fahrzeugseitige System übermittelt die eingegebenen Daten über das Mobilfunknetz 3 an die Zentraleinheit **(ZE)**. Die Zentrale 1 berechnet die Standardroute, die dem realen Fahrtroutenverlauf 13 des realen Fahrzeugs 12 zugrundegelegt wird, sowie gegebenenfalls Alternativrouten und übermittelt diese Daten über das Mobilfunknetz 3 zum fahrzeugseitigen System 4.
Durch eine Eingabe über das Tastenfeld 7 bzw. die Vorgabe eines Starttermins signalisiert der Fahrer dem System, daß er die Fahrt antritt.
In einer fahrzeugseitigen Datenverarbeitungseinheit 5 sowie einer Datenverarbeitungseinheit 2 auf Seiten der ZE 1 wird nun je ein virtueller Fahrtverlauf 23, 33 gestartet und über das Mobilfunknetz 3 synchronisiert 16. Jede der Datenverarbeitungseinheiten simuliert aufgrund der berechneten Fahrtroute sowie der Streckenwiderstände der Teilstücke der Fahrtroute die Fahrt 23, 33 eines virtuellen Fahrzeugs 22, 32 auf einer Fahrtroute, deren Verlauf mit der Standardroute identisch ist. Dies geschieht als völlig eigenständige, von der tatsächlichen Fahrt 13 unabhängige Echtzeitsimulation, ohne weitere externe Parameter wie Betriebs- oder Standortdaten des realen Fahrzeugs 12 abzufragen. Auf dem Display 6 erscheint in einem Routenfeld 9 der jeweils aktuelle Teil des fahrzeugseitig simulierten Fahrtverlaufes
23. Die Ortsveränderungen werden dem Fahrer auf einem Display 6 angezeigt. Der momentane Aufenthaltsort des virtuellen Fahrzeugs 22 auf der virtuellen Route 23, der idealerweise mit dem des realen Fahrzeugs 12 auf der realen Route 13 identisch ist, wird dabei auf geeignete Weise, z. B. durch einen markanten Farbbalken, hervorgehoben.
Daneben werden in einem Leiffenster 10 örtliche Angaben und Leitinformationen, wie Bezeichnungen der Abfahrten/Autobahnkreuze, Hinweise wie "nächste Abfahrt (Nr. 47) abfahren" etc. angezeigt.
Der Fahrer kann beim Auftreten von Abweichungen zwischen dem vom System auf dem Display 6 angezeigten Aufenthaltsort und der tatsächlichen Fahrzeugposition über das Tastenfeld 7 eine Korrektur 14 vornehmen. Die Korrektur 14 des Aufenthaltsbereiches wird den Datenverarbeitungseinheiten 2, 5 mitgeteilt und es werden die virtuellen Fahrtroutenabläufe 23, 33 durch eine erneute Synchronisation 16 über das Mobilfunknetz 3 abgeglichen. Unterbricht der Fahrer die Fahrt, so signalisiert er dem Fahrzeug- und Zentral-System die Fahrtunterbrechung durch eine entsprechende Tasteneingabe. Bei Wiederantritt der Fahrt teilt er dies dem System entsprechend mit.

Bei Verfügbarkeit eines GPS-Empfängers im Fahrzeug 12 ist eine optionale Verifikation 15 der Position des virtuellen Fahrzeugs 22 in der fahrzeugseitig simulierten virtuellen Fahrt 23 vorgesehen. Es wird eine Positionsabfrage der realen Fahrzeugposition des Fahrzeugs 12 durchgeführt und die Positionsdaten werden mit den aktuellen Positionsdaten des virtuellen Fahrzeugs 22 in der virtuellen Fahrt 23 verglichen. Wird eine Abweichung zwischen den Positionsdaten festgestellt und überschreitet die Abweichung einen vordefinierten Toleranzbereich, so erfolgt eine Korrektur der Position des virtuellen Fahrzeugs 22 auf der Route 23 und nachfolgend ein Abgleich 16 des zentraleseitigen Fahrtverlaufes 33.

Der ZE ist aus dem virtuellen Fahrtverlauf 33 der Aufenthaltsbereich sowie die Fahrtrichtung des virtuellen Fahrzeugs 32 bekannt. Diese Daten stimmen idealerweise mit den entsprechenden aktuellen Daten des realen Fahrzeugs 12 überein, was durch ausreichenden Abgleich der Fahrtverläufe 13, 23, 33 garantiert wird. Aktuelle Verkehrsmeldungen, die von einer Informationsstelle 8 an die ZE bereitgestellt werden, werden individuell für jeden Teilnehmer nach Fahrtroute/Fahrtrichtung und nach Fahrzeugaufenthaltsbereich zugeordnet. Die so gefilterten Informationen werden in einem Informationsfeld 11 auf dem jeweiligen Fahrer-Display 6 angezeigt. Die angezeigten Informationen werden automatisch aktualisiert. Die Informationen können aus Verkehrssituationsmeldungen oder lokalen Warnhinweisen, wie "Achtung, Nebel mit Sichtweiten unter 50m im Bereich ....", "Es kommt Ihnen ein Geisterfahrer entgegen, fahren Sie bitte äußerst rechts...", "Glatteis auf der Autobahnbrücke Tieftal", etc. bestehen.
Treten auf der geplanten Route Verkehrsstörungen auf, kann der Fahrer eine individuelle Ausweichempfehlung von der ZE anfordern. Diese Alternativroute kann der Fahrer dann auf dem Display 6 ablesen.

Über das Tastenfeld kann der Fahrer jederzeit den Informationsvorgang vollständig abbrechen. Es kann schließlich weiter vorgesehen sein, daß der Fahrer direkt Dienste und Informationen von der ZE abrufen kann wie z.B. Wetterdaten für ein bestimmtes Gebiet, Auskünfte über Hotels, Telefon- sowie Adreßauskünfte oder ähnliches. Diese Dienste und Informationen können von der ZE direkt zur Verfügung gestellt werden oder es wird ein Zugang zu entsprechenden Diensteanbietern eingerichtet, der über die ZE oder direkt zu den Diensteanbietern erfolgen kann. Weitere Anwendungsbereiche wären Hotel- Bahn- oder Flugreservierungen sowie Finanz- und Börsengeschäfte.

## Patentansprüche

1. Verfahren für ein Fahrzeugleit- und Informationssystem, bei dem mit Hilfe mindestens eines Funkübertragungssystems Daten sowie verkehrsrelevante Informationen zwischen einem Fahrzeug und einer Zentraleinheit (1) übermittelt werden, und
- in einer Datenverarbeitungseinheit der Zentraleinheit und/oder einer Datenverarbei tungseinheit (5) des Fahrzeugs mindestens eine Fahrtroute berechnet wird,
- die Routendaten über das Funkübertragungssystem (3) zwischen dem Fahrzeug und der Zentraleinheit übermittelt werden, **dadurch gekennzeichnet,** daß
- in der Datenverarbeitungseinheit der Zentraleinheit und/oder in der Datenverarbeitungseinheit des Fahrzeugs eine Echtzeitsimulation der Fahrt des Fahrzeugs erfolgt, indem in der jeweiligen Datenverarbeitungseinheit eine virtuelle Fahrtroute (32, 23) durchlaufen wird, die der tatsächlichen Fahrtroute des realen Fahrzeuges entspricht, wobei die Echtzeitsimulation völlig eigenständig von der tatsächlichen Fahrt des Fahrzuges abläuft,
- für den Fall der Durchführung einer Echtzeitsimulation sowohl in der Datenverarbeitungseinheit des Fahrzeugs als auch in der Datenverarbeitungseinheit der Zentrale eine Synchronisation (16) der Echtzeitsimulationen durch Signale erfolgt, die über das Funkübertragungssystem (3) übermittelt werden,
- die durch die Echtzeitsimulation ermittelte Fahrzeugposition der Fahrt sowie die zusätzlichen verkehrsrelevanten Informationen im Fahrzeug angezeigt werden.

2. Verfahren nach Anspruch 1,
dadurch gekennzeichnet,
daß die Zentraleinheit die zusätzlichen verkehrsrelevanten Informationen anhand der aus der Echtzeitsimulation gewonnenen Position des Fahrzeugs auswählt und gezielt über das Funkübertragungssystem an das Fahrzeug übermittelt.

3. Verfahren nach Anspruch 1 oder 2,
dadurch gekennzeichnet,
daß fahrzeugseitig über ein Dateneingabegerät Vorgaben zur Fahrt, insbesondere die Start- und Zielorte, eingegeben und an die Datenverarbeitungseinheiten im Fahrzeug und in der Zentraleinheit übermittelt werden und
daß diese Vorgaben der Festlegung der Fahrtroute und des Starts der Echtzeitsimulation zugrundeliegen.

4. Verfahren nach einem der Ansprüche 1 bis 3,
dadurch gekennzeichnet,
daß fahrzeugseitig über das Dateneingabegerät die Fahrzeugposition in der Echtzeitsimulation der Fahrt korrigiert werden kann.

5. Verfahren nach einem der Ansprüche 1 bis 4,
dadurch gekennzeichnet,
daß die fahrzeugseitige Datenverarbeitungseinheit über ein Ortungssystem, insbesondere über ein Funkortungssystem, die tatsächliche Position des Fahrzeuges ermittelt und diese mit der aktuellen Fahrzeugposition in der Echtzeitsimulation der Fahrt vergleicht
und daß bei Überschreiten einer Toleranzgrenze für die Abweichung der tatsächlichen Fahrzeugposition von der aktuellen Fahrzeugposition in der Echtzeitsimulation der Fahrt der fahrzeugseitigen Datenverarbeitungseinheit eine Korrektur der Fahrzeugposition in der Echtzeitsimulation der Fahrt erfolgt.

6. Verfahren nach einem der Ansprüche 1 bis 5,
dadurch gekennzeichnet,
daß eine Synchronisation der Echtzeitsimulation der Fahrt in der Datenverarbeitungseinheit der Zentraleinheit mit der Echtzeitsimulation der Fahrt in der Datenverarbeitungseinheit des Fahrzeugs zumindest erfolgt, wenn
- eine Eingabe von den Fahrtroutenablauf betreffenden Daten über das fahrzeugseitige Dateneingabegerät erfolgt und/oder
- eine Korrektur der Fahrzeugposition auf der virtuellen Fahrt durch die fahrzeugseitige Datenverarbeitungseinheit erfolgt.

7. Verfahren nach einem der Ansprüche 1 bis 6,
dadurch gekennzeichnet,
daß fahrzeugseitig über das Fahrzeugleit- und Informationssystem Dienste und/oder Informationen, insbesondere verkehrsrelevante Informationen, abgerufen werden können.

8. Verfahren nach einem der Ansprüche 1 bis 7,
dadurch gekennzeichnet,
daß das Funkübertragungssystem ein digitales Mobilfunknetz ist.

## Claims

1. Process for a vehicle control and information system in which data and traffic-related information are transferred between a vehicle and a central unit (1) using at least one radio transmission system, and
- at least one route is calculated in a data processing unit of the central unit and/or a data processing unit (5) of the vehicle,
- the route data are transferred between the vehicle and the central unit via the radio transmission system (3), characterized in that
- a real-time simulation of the vehicle journey is carried out in the data processing unit of the central unit and/or in the data processing unit of the vehicle in that a virtual route (32, 23) which corresponds to the actual route of the real vehicle is run through in the respective data processing unit, the real-time simulation running completely independently of the actual vehicle journey,
- in the event that the real-time simulation is carried out both in the data processing unit of the vehicle and in the data processing unit of the control centre, the real-time simulation is synchronised (16) by means of signals which are transferred via the radio transmission system (3),
- the vehicle position on the journey, which position is determined by the real-time simulation, and the additional traffic-related information are displayed in the vehicle.

2. Process according to Claim 1, characterized in that the central unit selects the additional traffic-related information with reference to the vehicle position acquired from the real-time simulation and transfers the information to the vehicle in a selective fashion via the radio transmission system.

3. Process according to Claim 1 or 2, characterized in that prespecified values relating to the journey, in particular relating to the starting point and destinations, are entered at the vehicle end by means of a data input unit and are transferred to the data processing units in the vehicle and in the central unit, and in that these prespecified values are used as the basis for defining the route and the start of the real-time simulation.

4. Process according to one of Claims 1 to 3, characterized in that at the vehicle end the vehicle position can be corrected in the real-time simulation of the journey by means of the data input unit.

5. Process according to one of Claims 1 to 4, characterized in that the vehicle-end data processing unit determines the actual position of the vehicle by means of a locating system, in particular by means of a radio locating system, and compares said position with the current vehicle position in the real-time simulation of the journey, and in that, when a tolerance limit for the deviation of the actual vehicle position from the current vehicle position in the real-time simulation of the journey of the vehicle-end data processing unit is exceeded, the vehicle position in the real-time simulation of the journey is corrected.

6. Process according to one of Claims 1 to 5, characterized in that the real-time simulation of the journey is synchronised in the data processing unit of the central unit with the real-time simulation of the journey in the data processing unit of the vehicle at least when
- data relating to the route sequence are entered via the vehicle-end data input unit and/or
- the vehicle position on the virtual journey is corrected by means of the vehicle-end data processing unit.

7. Process according to one of Claims 1 to 6, characterized in that services and/or information, in particular traffic-related information, can be called at the vehicle end via the vehicle control and information system.

8. Process according to one of Claims 1 to 7, characterized in that the radio transmission system is a digital mobile radio network.

## Revendications

1. Procédé pour un système de guidage et d'information de véhicule, dans lequel, à l'aide d'au moins un système de transmission radio, des données ainsi que des informations concernant la circulation sont transmises entre un véhicule et une unité centrale (1), et
- dans l'unité de traitement de données de l'unité centrale et/ou une unité de traitement de données (5) appartenant au véhicule, étant effectué au moins le calcul d'une route à suivre,
- les données de route étant transmises par l'intermédiaire du système de transmission radio (3) entre le véhicule et l'unité centrale, caractérisé en ce que
- dans l'unité de traitement de données de l'unité centrale et/ou dans l'unité de traitement de données du véhicule, une simulation en temps réel du déplacement du véhicule, est effectuée dans laquelle, dans l'unité de traitement de données respective, une route à suivre virtuelle (32, 23) est parcourue qui correspond à la route à suivre effective du véhicule réel, la simulation en temps réel se déroulant de façon totalement autonome en se basant sur le trajet effectivement suivi par le véhicule,
- dans le cas d'exécution d'une simulation en temps réel ainsi que dans l'unité de traitement de données du véhicule et également dans l'unité de traitement de données de la centrale, s'effectue une synchronisation (16) des simulations en temps réel, au moyen de signaux qui sont transmis par le système de transmission radio,
- la position de véhicule, déterminée par la simulation en temps réel, sur la route suivie ainsi que les informations supplémentaires concernant la circulation sont affichées dans le véhicule.

2. Procédé selon la revendication 1, caractérisé en ce que l'unité centrale sélectionne les informations supplémentaires concernant la circulation, à l'aide de la position du véhicule, obtenue à partir de la simulation en temps réel, et transmettant, a dessein, au véhicule par l'intermédiaire du système de transmission radio.

3. procédé selon la revendication 1 ou 2, caractérisé en ce que côté véhicule, des allocations concernant la route à suivre, en particulier les sites de départ et d'objectif, sont introduites par l'intermédiaire d'un appareil d'introduction de données, et sont transmises aux unités de traitement de données installées dans le véhicule et dans l'unité centrale, et
en ce que ces allocations servent de base à la fixation de la route à suivre et au démarrage de la simulation en temps réel.

4. Procédé selon l'une des revendications 1 à 3, caractérisé en ce que, côté véhicule, la position du véhicule, dans la simulation en temps réel du trajet, peut être corrigée par l'intermédiaire de l'appareil d'introduction de données.

5. Procédé selon l'une des revendications 1 à 4, caractérisé en ce que l'unité de traitement de données, installée côté véhicule, détermine par l'intermédiaire d'un système de localisation, en particulier par l'intermédiaire d'un système de localisation radio, la position effective du véhicule et la compare à la position de véhicule réelle obtenue dans la simulation en temps réel du trajet suivi, et
en ce que, en cas de dépassement d'une limite de tolérance, concernant l'écart entre la position effective du véhicule et la position réelle du véhicule, dans la simulation en temps réel du trajet de l'unité de traitement de données située côté véhicule, une correction de la position de véhicule dans la simulation en temps réel du trajet est effectuée.

6. Procédé selon l'une des revendications 1 à 5, caractérisé en ce qu'une synchronisation de la simulation en temps réel du trajet est effectuée dans l'unité de traitement de données de l'unité centrale, avec la simulation en temps réel du trajet dans l'unité de traitement de données du véhicule, au moins lorsqu'
- une introduction de données concernant le déroulement du parcours est effectuée par l'intermédiaire de l'appareil d'introduction de données situé côté véhicule et/ou
- une correction de la position du véhicule, sur le trajet virtuel, est effectuée par l'unité de traitement de données située côté véhicule.

7. Procédé selon l'une des revendications 1 à 6, caractérisé en ce que, côté véhicule, par l'intermédiaire du système de guidage et d'information de véhicule, des services et/ou des informations, en particulier des informations concernant la circulation, peuvent être obtenues par interrogation.

8. Procédé selon l'une des revendications 1 à 7, caractérisé en ce que le système de transmission radio est un réseau radio mobile numérique.
